# EUROPEAN PATENT APPLICATION

(11) **EP 2 696 646 A1**
(43) Date of publication of application: **12.02.2014**
(21) Application number: 12768199.7
(22) Date of filing: 06.04.2012
(51) Int. Cl.: H04W 84/18, H04W 16/26, H04W 72/04, H04W 84/12

(54) **WIRELESS COMMUNICATION DEVICE, COMMUNICATION METHOD, AND PROGRAM**

(30) Priority: 07.04.2011 JP 2011085228
(71) Applicant: NEC CASIO Mobile Communications, Ltd., Kawasaki-shi Kanagawa 211-8666 (JP)
(72) Inventor: NAWASHIRO, Tatsuya, Kawasaki-Shi, Kanagawa 211-8666 (JP)
(74) Representative: Vossius & Partner
(86) International application number: PCT/JP2012/059481
(87) International publication number: WO 2012/137908

(57) **Abstract**

A wireless communication apparatus is provided with a function to select a frequency band that does not violate regulations. The wireless communication apparatus includes: a first wireless communication unit that connects with an external network, a second wireless communication unit that forms a service area in which it is possible to connect with the external network using either of a first frequency band and a second frequency band that are different from each other, a location information acquisition unit that acquires location information of the own apparatus, and a selector that selects either the first frequency band or the second frequency band, based on the location information.

## Description

### TECHNICAL FIELD

### [CROSS-REFERENCE TO RELATED APPLICATIONS]

The present application claims priority from Japanese Patent Application No. JP2011-085228 (filed on April 7, 2011) the content of which is hereby incorporated in its entirety by reference into this specification. The present invention relates to a wireless communication apparatus, a communication method and a program, and in particular to a wireless communication apparatus, a communication method and a program that provide a service as a wireless access point.

### BACKGROUND ART

Apparatuses called mobile routers that are directed towards mobile terminals with advanced features, referred to as tablet personal computers and smart phones, are known. The apparatuses enable high speed mobile broadband lines while being easily carried around. In recent years, attention is being given to mobile 3G routers that handle 3G lines and to mobile WiMAX routers that provide a WiMAX connection environment where area expansion is advancing, with regard to user terminals handling wireless LANs (Local Area Networks) which are in widespread use. Mobile phone units having a function referred to as tethering, equivalent to the mobile 3G routers described above, are also commercially available.

However, while on the one hand these mobile routers can be used in various places without a license, a wide variety of restrictions exist with regard to available frequency band, output and the like. The following patent literatures may be cited.

Patent Literature 1 proposes a function that alerts a user in a case of there being a possibility of using a wireless LAN under a condition that could be in violation of the Radio Law. Specifically, an information processing apparatus (wireless LAN handset) in Patent Literature 1 operates to display a warning when IEEE802.11a has been selected in an ad hoc mode, and to recommend usage indoors to the user. In a case of infrastructure mode, an information processing apparatus (wireless LAN handset) in Patent Literature 1 operates to display a warning when a dedicated indoor network is selected as a network access point, and to recommend reselection of a network when not indoors.

Patent Literature 2 discloses a wireless communication apparatus (wireless LAN handset) provided with a function that emits a detection transmission signal, and by receiving a reflected wave therefrom, automatically determines whether or not the apparatus is indoors, and selects a communication frequency band.

### CITATION LIST

### PATENT LITERATURE

[PTL 1]
   Japanese Patent Kokai Publication No. JP2004-336351A
[PTL 2]
   Japanese Patent Kokai Publication No. JP2003-333640A

### SUMMARY OF INVENTION

### TECHNICAL PROBLEM

The respective disclosures of Patent Literature 1 and 2 given above are hereby incorporated herein their entirety by reference. The following analysis is made by the inventor of the present invention. In Patent Literature 1 and 2, usage in violation of the Radio Law is deterred by causing an apparatus side (user terminal) using a wireless LAN to select a frequency and access point.

However, there is a problem in that a mobile router as described above can be used in various places, and by taking it from indoors to outdoors, for example, a service may be provided that is in violation of the Radio Law.

In a case where a mobile router handles a plurality of frequency bands or wireless communication systems, there may be a demand for usage where there is little radio frequency interference, where transmission speed is high, where power consumption is low, or with high security.

The present invention provides a wireless communication apparatus, a communication method and a program, that have a function to select a wireless communication system that uses a frequency band based on location information, from among different frequency bands, to form a wireless service area.

### SOLUTION TO PROBLEM

According to a first aspect of the present invention there is provided a wireless communication apparatus comprising: a first wireless communication unit that connects with an external network; a second wireless communication unit that forms a service area in which it is possible to connect with the external network using either of a first frequency band and a second frequency band that are different from each other; a location information acquisition unit that acquires location information of the apparatus itself; and a selector that selects either of the first frequency band and the second frequency band, based on the location information.

According to a second aspect of the present invention there is provided a communication method comprising steps of a wireless communication apparatus acquiring location information of the own apparatus, wherein the wireless communication apparatus comprises a first wireless communication unit that connects with an external network and a second wireless communication unit that forms a service area in which it is possible to connect with the external network using either of a first frequency band and a second frequency band that are different from each other; and selecting, based on the location information, either of the first frequency band and the second frequency band, and connects a user terminal to the external network. The present method is associated with a specific apparatus, known as a wireless communication apparatus, which functions as a wireless access point.

According to a third aspect of the present invention there is provided a program that executes, in a computer installed in a wireless communication apparatus comprising a first wireless communication unit that connects with an external network and a second wireless communication unit that forms a service area in which it is possible to connect with the external network using either of a first frequency band and a second frequency band that are different from each other: a process of acquiring location information of the apparatus itself, and a process of selecting, based on the location information, either of the first frequency band and the second frequency band, and of connecting a user terminal to the external network. It is to be noted that the program may be recorded in a computer readable (non-transient) storage medium. That is, the present invention can be embodied as a computer program product.

### ADVANTAGEOUS EFFECTS OF INVENTION

The present invention enables selection of a wireless communication system that uses a frequency band based on location information, from among different frequency bands, to provide a connection service to an external network.

### BRIEF DESCRIPTION OF DRAWINGS

FIG. 1 is a diagram for describing an outline of an exemplary embodiment of the present invention.
FIG. 2 is a diagram representing an overall configuration of a first exemplary embodiment of the present invention.
FIG. 3 is a block diagram representing a configuration of a wireless communication apparatus of the first exemplary embodiment of the present invention.
FIG. 4 is a flowchart representing operation of the wireless communication apparatus of the first exemplary embodiment of the present invention.
FIG. 5 is a diagram for describing operations of the wireless communication apparatus of the first exemplary embodiment of the present invention.
FIG. 6 is a diagram representing an overall configuration of a second exemplary embodiment of the present invention.
FIG. 7 is a block diagram representing a configuration of a wireless communication apparatus of the second exemplary embodiment of the present invention.
FIG. 8 is an example of a table held in a configuration storage unit of the wireless communication apparatus of the second exemplary embodiment of the present invention.
FIG. 9 is a flowchart representing operations of a terminal apparatus of the second exemplary embodiment of the present invention.
FIG. 10 is a diagram for describing operations of the wireless communication apparatus of the second exemplary embodiment of the present invention.
FIG. 11 is a continuation diagram of FIG. 10.
FIG. 12 is another diagram for describing operations of the wireless communication apparatus of the second exemplary embodiment of the present invention.
FIG. 13 is an example of a table after restriction information has been updated by a configuration change unit.
FIG. 14 is a block diagram representing a configuration of a wireless communication apparatus of a third exemplary embodiment of the present invention.
FIG. 15 is a diagram for describing a wireless communication apparatus of a fourth exemplary embodiment of the present invention.

### DESCRIPTION OF EMBODIMENTS

First a description is given concerning an outline of an exemplary embodiment of the present invention, making reference to the drawings. In what follows, reference symbols in the drawings attached to this outline are added to respective elements for convenience, as examples in order to aid understanding, and are not intended to limit the invention to modes shown in the drawings.

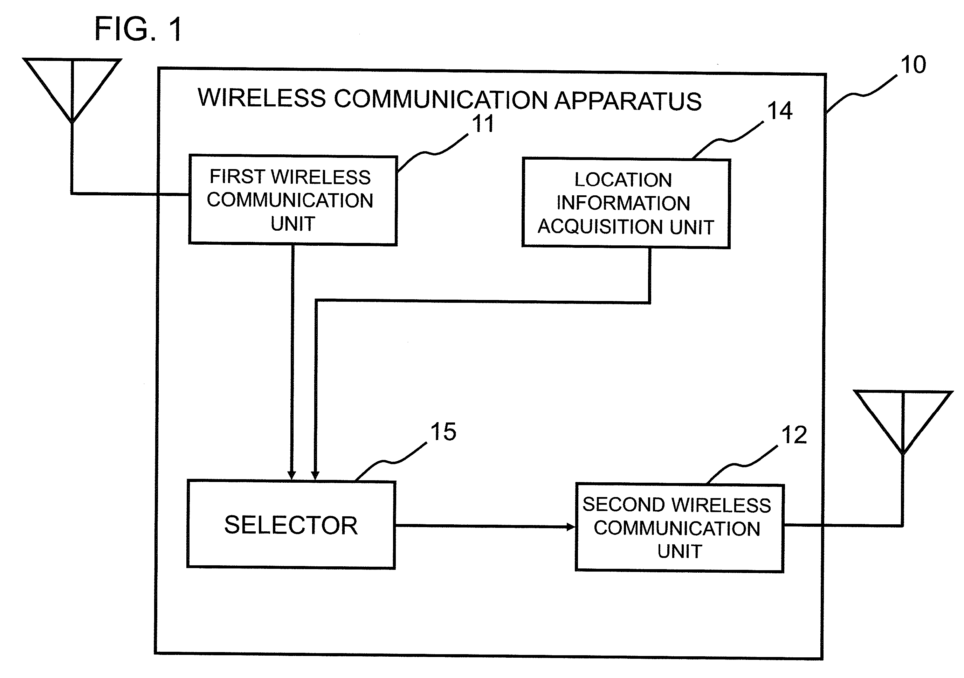

In an exemplary embodiment of the present invention as shown in FIG. 1, the invention can be realized by a configuration provided with: a first wireless communication unit 11 that connects with an external network, a second wireless communication unit 12 that forms a service area in which it is possible to connect with the external network using either of a first frequency band and a second frequency band that are different from each other, a location information acquisition unit 14 that acquires location information of the apparatus itself, and a selector 15 that selects either the first frequency band or the second frequency band, based on the location information.

A wireless communication apparatus as described above, for example, in a case where the location of the equipment itself is one where there is a high probability of outdoor usage, selects a wireless communication system that uses a frequency band for which outdoor usage is approved. Meanwhile, if both the first frequency band and the second frequency band can be used, it is desirable to make a selection so as to have a high transmission speed, low power consumption, or high security.

By having an arrangement as described above, it is possible to select a wireless communication system that uses a frequency band which is not in violation of regulations or the like, from among different frequency bands, and to provide a connection service to an external network. That is, a user can use a service area formed by the wireless communication apparatus according to the invention with reassurance, without provision of an alert function or an automatic selection function related to frequency band or access point as in Patent Literature 1 and 2.

### [First Exemplary Embodiment]

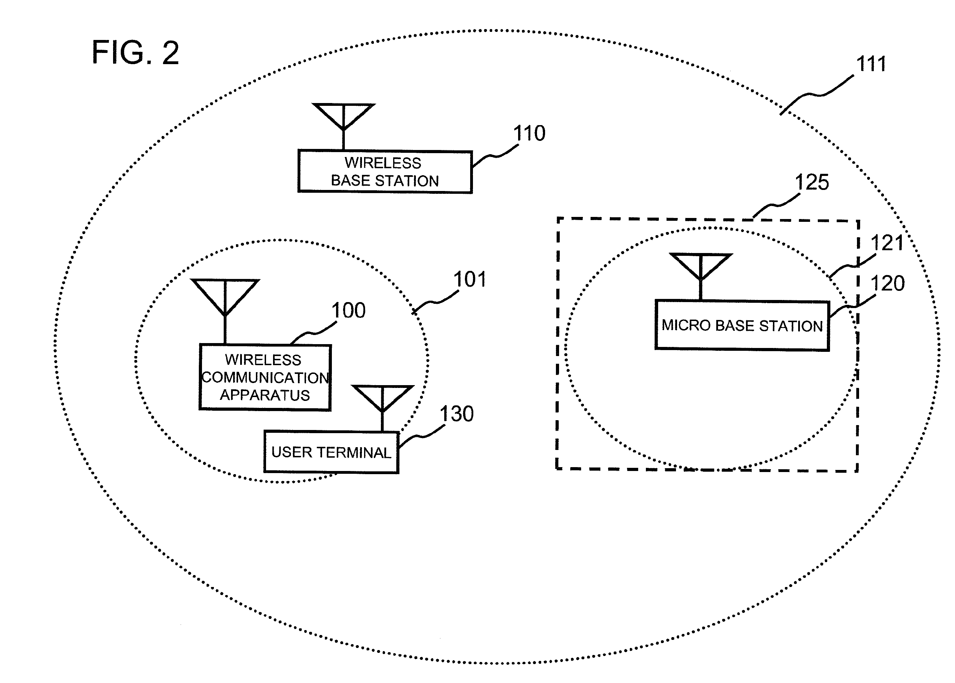

Next, a detailed description is given concerning a first exemplary embodiment of the present invention, making reference to the drawings. FIG. 2 is a diagram representing an overall configuration of the first exemplary embodiment of the present invention. FIG. 2 illustrates a configuration in which a micro base station 120 is installed in a building 125 within a cell 111 configured by a wireless base station 110.

A wireless communication apparatus 100 is an apparatus that configures a wireless LAN service area 101, and provides a service as a wireless LAN access point to a user terminal 130 located inside the service area 101. The wireless communication apparatus 100 connects the user terminal 130 to an external network via the wireless base station 110 within the cell 111 (including cell 121). In a case of being located inside the cell 121 configured by the micro base station 120, the wireless communication apparatus 100 can also connect the user terminal 130 to an external network via the micro base station 120. The micro base station is a base station that configures a cell (also called a femtocell, picocell or the like, according to area size) that has an area smaller than the cell 111 (also called a macro cell) configured by the wireless base station 110. It is to be noted that with regard to this type of wireless communication apparatus 100, besides a dedicated apparatus such as a mobile router or the like, it is possible to use a mobile phone provided with a mobile router function or tethering, a smart phone, a game console, various types of personal computer such as a tablet computer, or various types of home information appliance.

The user terminal 130 is a terminal provided with a function to connect to an external network as a wireless LAN handset. For example, a mobile phone, a smart phone, a game console, various types of personal computer such as a tablet computer, and various types of home information appliance may be cited.

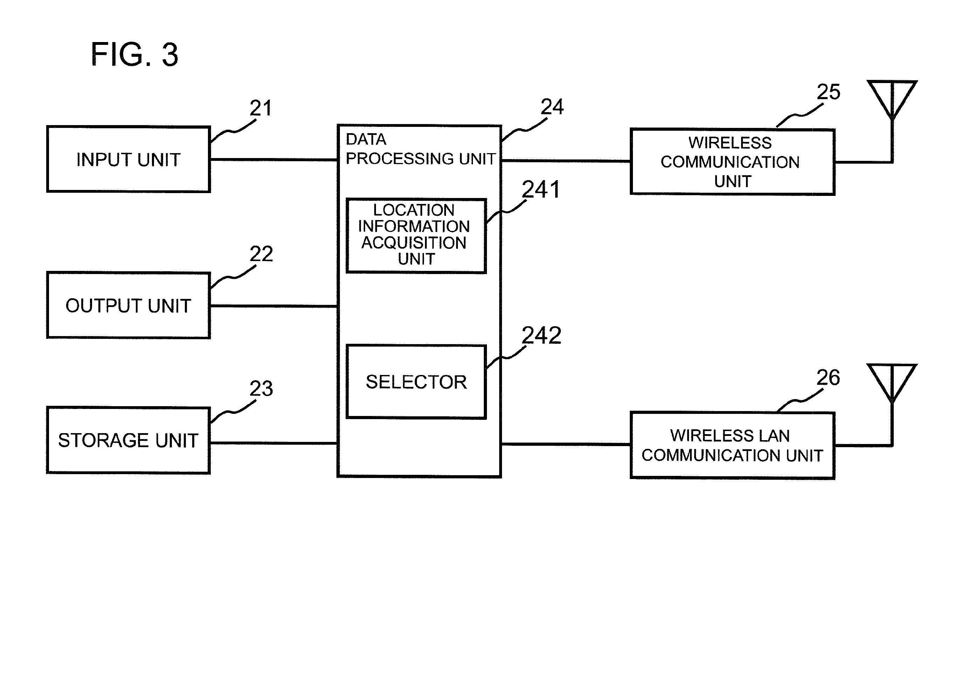

FIG. 3 is a block diagram representing a detailed configuration of the wireless communication apparatus 100 configured by a mobile terminal provided with a tethering function. Referring to FIG. 3, a configuration is shown that is provided with an input unit 21, an output unit 22, a storage unit 23, a data processing unit 24, a wireless communication unit 25, and a wireless LAN communication unit 26.

The input unit 21 is configured by a keyboard, a pointing apparatus, a microphone for user voice input, or the like, in order to receive various operations from the user. It is to be noted that in a case where the wireless communication apparatus 100 is a dedicated apparatus such as a mobile router, since various types of configuration can be performed by the user terminal 130 or the like, the input unit 21 can have a very simple configuration such as a power supply button, a reset button or the like.

The output unit 22 is configured by a display device such as a liquid crystal display, a receiver (voice output apparatus) that outputs a communication partner's voice, or the like. It is to be noted that in a case where the wireless communication apparatus 100 is a dedicated apparatus such as a mobile router or the like, the output unit 22 may be configured by a simple liquid crystal display device or LED (Light Emitting Diode) that displays connection status of an external network, signal status of a wireless LAN, power supply status, or the like.

The storage unit 23 is configured by an EEPROM (Electrically Erasable Programmable ROM) or the like, that stores a computer program or data for operating a location information acquisition unit 241 and a selector 242, which are described later, in the data processing unit 24.

The wireless communication unit 25 connects with a wireless base station 110 or a micro base station 120 via an antenna, and is used for voice telephone communication or data communication, via an external network (equivalent to a first wireless communication unit described above). In the following description, the wireless base station 110 is a base station installed by a mobile communication network provider; the micro base station 120 is a base station installed indoors, receiving permission of the mobile communication network provider; and each of these can be identified by a base station ID or the like. It is to be noted that the wireless base station 110 and the micro base station 120 may be a mobile WiMAX (Worldwide Interoperability for Microwave Access) base station specified by IEEE 802.16e-2005 or the like.

The wireless LAN communication unit 26 is connected to the user terminal 130 located inside the service area (101 in FIG. 2) via a wireless LAN antenna (equivalent to a second wireless communication unit described above). The wireless LAN communication unit 26 can switch to either of (1) IEEE802.11a or IEEE802.11n (both with frequency band 5 GHz), or (2) IEEE802.11b or IEEE802.11g (both with frequency band 2.4 GHz), as a wireless communication system. In the present exemplary embodiment, IEEE802.11a or IEEE802.11n, using a frequency band of 5 GHz, relate to a wireless communication system that uses a frequency band for which outdoor usage is prohibited (with IEEE802.11n, 2.4 GHz can also be used). It is to be noted that these frequency bands are only examples based on the laws and regulations in Japan at the present time, and clearly there may be changes due to law revisions in the future; in various foreign countries, selection of frequency band or wireless communication system may be necessary in accordance with the laws or regulations of the country concerned.

The data processing unit 24 is provided with the location information acquisition unit 241 that acquires base station information received from the wireless communication unit 25 as location information of the apparatus itself, and the selector 242 that distinguishes whether or not the apparatus itself in indoors, based on the acquired base station information, to perform control for switching the wireless communication system to be used in the wireless LAN communication unit 26.

It is to be noted that each unit (processing means) in the data processing unit 24 of the wireless communication apparatus 100 shown in FIG. 3 may be implemented by a computer program that executes the respective processes described above on a computer configuring the data processing unit 24, using hardware thereof.

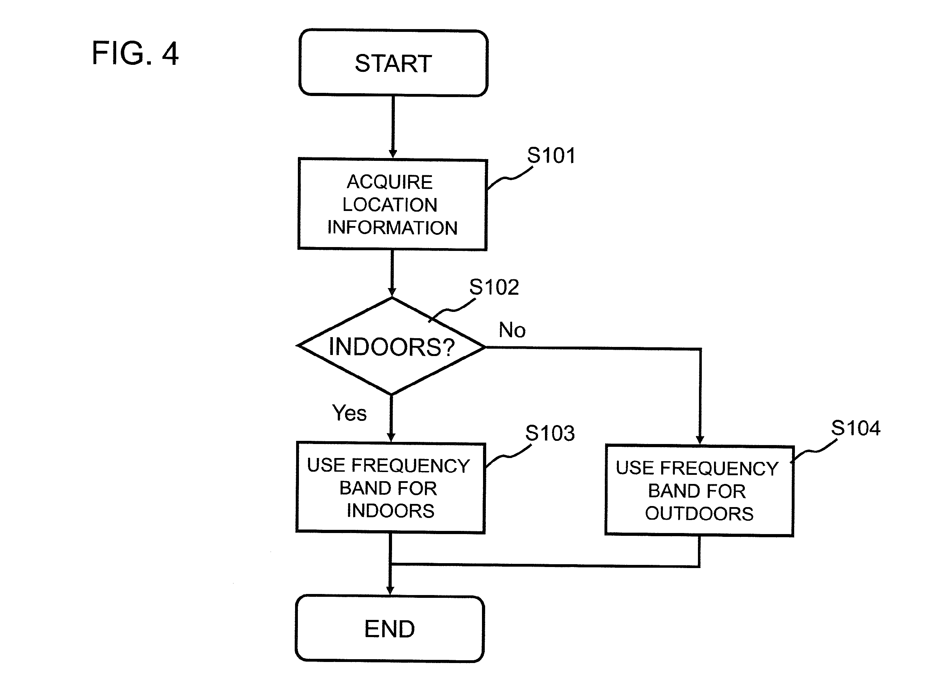

Next, a detailed description is given concerning operations of the wireless communication apparatus 100 of the present exemplary embodiment, making reference to the drawings. FIG. 4 is a flowchart representing operations of the wireless communication apparatus 100 of the present exemplary embodiment. First when a tethering function is activated (setting: ON), the location information acquisition unit 241 of the data processing unit 24 of the wireless communication apparatus 100 performs detection of a connectable wireless base station 110 and micro base station 120 (below, when distinction is not particularly necessary, the two are collectively expressed as "base station" for convenience) (step S101: location information acquisition).

For example, in a case where the wireless communication apparatus 100 is at a location shown in FIG. 2, the location information acquisition unit 241 detects the wireless base station 110 as a connectible base station.

The selector 242 of the data processing unit 24 determines whether or not the micro base station 120 is included with the base station detected as being connectable (step S102: "indoors?"). In a case of FIG. 2, since the base station detected as being connectable is the wireless base station 110, a determination of being outdoors is made ("No" in step S102); a wireless communication system ((2) IEEE802.11b or IEEE802.11g as described above) that uses an outdoor frequency band is selected; and a service (provision of a tethering function) as a wireless LAN access point is started (step S104).

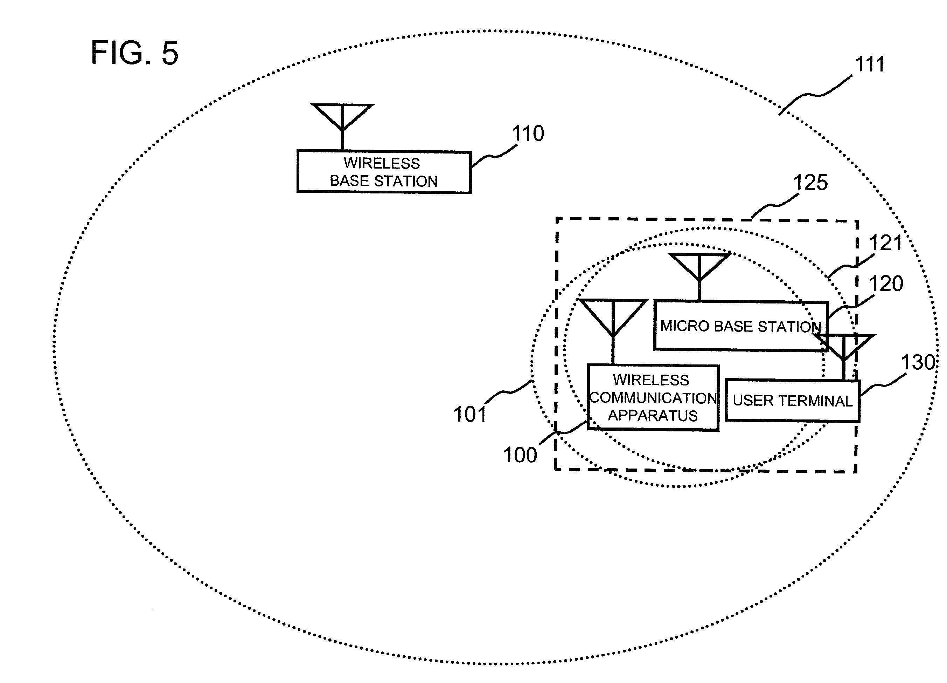

On the other hand, in a case where the wireless communication apparatus 100 moves and is at a location shown in FIG. 5, the location information acquisition unit 241 detects two base stations, the wireless base station 110 and the micro base station 120, as a connectible base station.

In this case, in step S102, since the micro base station 120 is included with the base station detected as being connectable, a determination of being indoors is made ("Yes" in step S102); a wireless communication system ((1) IEEE802.11a or IEEE802.11n as described above) that uses an indoor frequency band is selected; and service (provision of a tethering function) as a wireless LAN access point is started (step S103).

As described above, according to the present exemplary embodiment, it is possible to provide a service (provision of a tethering function) by selecting a wireless communication system in compliance with laws and regulations as a wireless LAN access point, without a user of the user terminal being aware of it.

Switching of the abovementioned wireless communication system is accompanied at the same time by a change to a frequency band with little radio interference indoors. Whether to use IEEE802.11a or IEEE802.11n, or whether to use IEEE802.11b or IEEE802.11g may be made in accordance with a user configuration made in advance.

It is to be noted that besides the tethering function being activated (setting: ON), the abovementioned flow sequence may be performed with the detection of a fixed time having elapsed or of a change of base station. By such an arrangement, the wireless communication system can be revised in accordance with movement of the user.

### [Second Exemplary Embodiment]

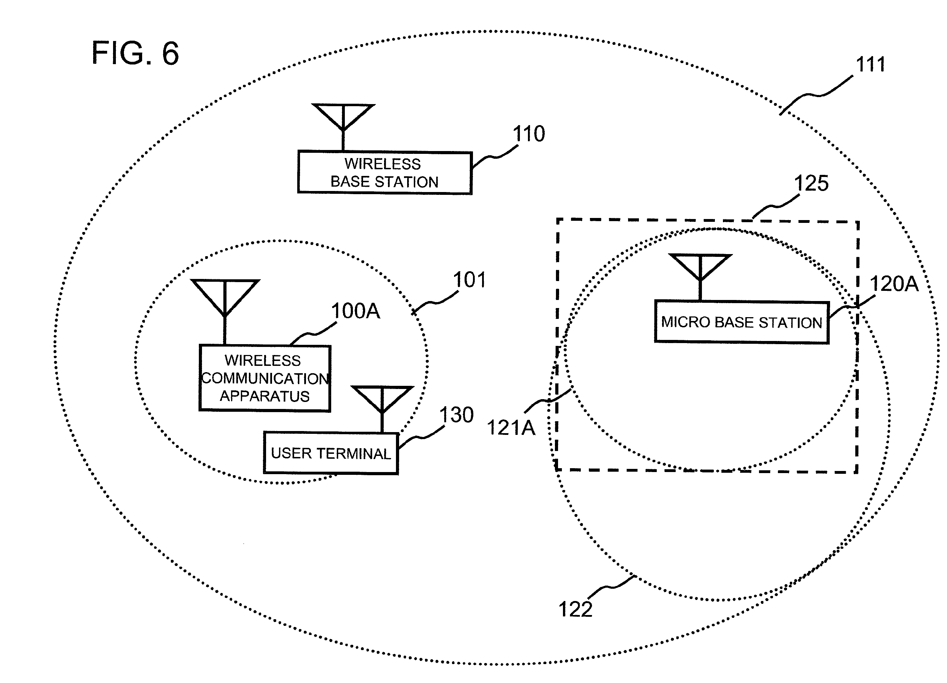

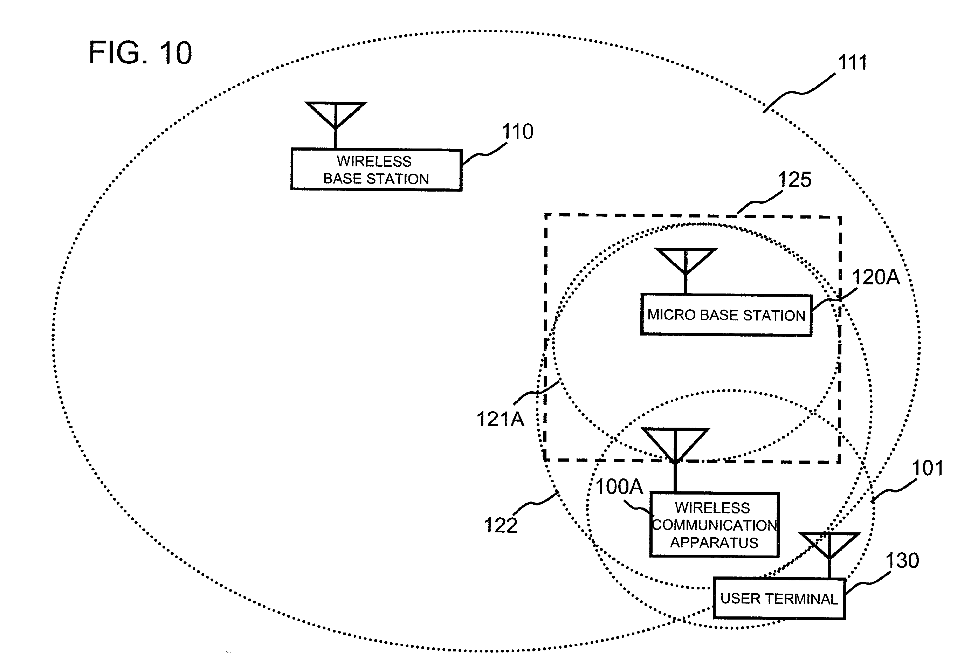

Next, a detailed description is given concerning a second exemplary embodiment of the present invention, making reference to the drawings. As shown in FIG. 6, a situation may be considered where a micro base station 120A configures a cell 122 with an area exceeding the range of a building 125. In this case, a situation may be considered where even if a wireless communication apparatus 100A is within the cell 122, it is outside the building (refer to FIG. 10). In the present exemplary embodiment, in a case where a cell of the micro base station 120A is large, it is possible to precisely determine whether or not a apparatus is indoors. In the following, since the basic configuration common to the first exemplary embodiment, the description is centered on points of difference.

FIG. 6 illustrates a configuration in which the micro base station 120A is installed in a building 125 within a cell 111 configured by a wireless base station 110. A difference from the first exemplary embodiment is that the micro base station 120A configures the cell 122 that covers not only inside the building 125 but also a wide surrounding coverage area. A dotted line 121A within the cell indicates a range where electric field strength is greater than or equal to A.

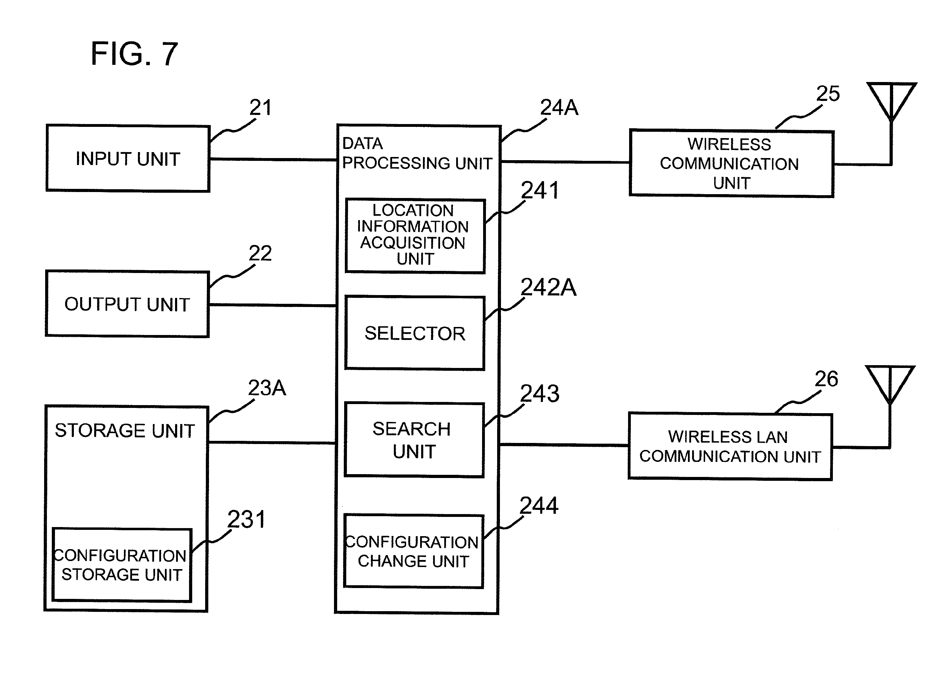

FIG. 7 is a block diagram representing a detailed configuration of the wireless communication apparatus 100A configured by a mobile terminal provided with a tethering function. A basic configuration of the wireless communication apparatus 100A, which is provided with an input unit 21, an output unit 22, a storage unit 23A, a data processing unit 24A, a wireless communication unit 25, and a wireless LAN communication unit 26, is similar to the wireless communication apparatus 100 of the first exemplary embodiment.

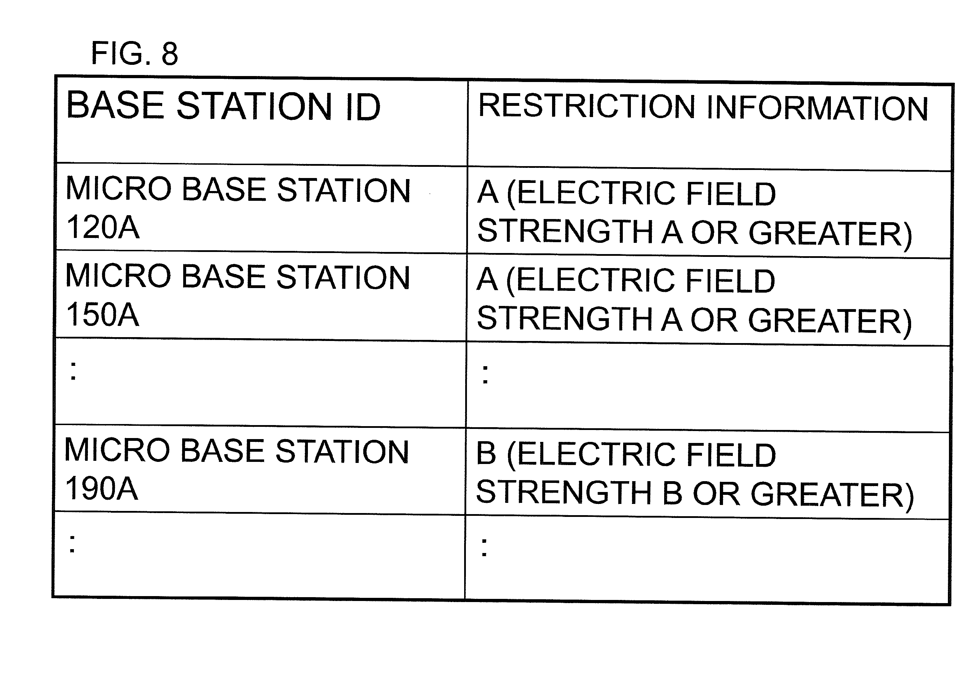

The storage unit 23A of the wireless communication apparatus 100A further includes a configuration storage unit 231 that stores restriction information for determining whether or not to select a wireless communication system using a frequency band for indoors, with regard to the micro base station. FIG. 8 is an example of a table defining correspondence relationships between micro base station and restriction information. For example, in a case of the micro base station 120A of FIG. 8, with a condition that the estimated electric field strength for a location indoors be greater than or equal to A, a wireless communication system using a frequency band for indoors is selected.

Besides a location information acquisition unit 241 of the first exemplary embodiment described above, with a base station ID as a key, the following are added to the data processing unit 24A: a search unit 243 that searches for restriction information for a relevant micro base station from the configuration storage unit 231, and a configuration change unit 244 that updates content of the configuration storage unit 231. A selector 242A of the data processing unit 24A differs from the first exemplary embodiment in that, in addition to simply a micro base station being detected, refers to the restriction information configured in the configuration storage unit 231, to perform control to switch the wireless communication system used in the wireless LAN communication unit 26.

It is to be noted that each unit (processing means) in the data processing unit 24A of the wireless communication apparatus 100A shown in FIG. 7 may be implemented by a computer program that executes the respective processes described above on a computer configuring the data processing unit 24A, using hardware thereof.

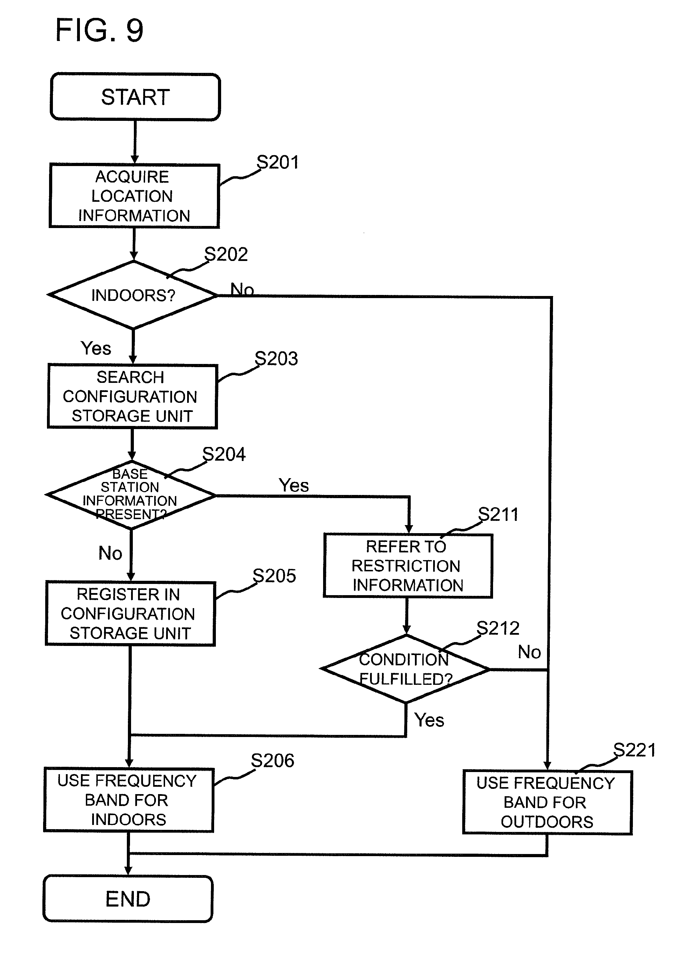

Next, a detailed description is given concerning operations of the wireless communication apparatus 100A of the present exemplary embodiment, making reference to the drawings. FIG. 9 is a flowchart representing operations of the wireless communication apparatus 100A of the present exemplary embodiment. First, when a tethering function is activated (setting: ON), the location information acquisition unit 241 of the data processing unit 24 of the wireless communication apparatus 100A performs detection of a connectable base station (step S201: location information acquisition).

For example, in a case where the wireless communication apparatus 100 is at a location shown in FIG. 6, the location information acquisition unit 241 detects the wireless base station 110 as a connectible base station.

The selector 242 of the data processing unit 24A determines whether or not the micro base station 120A is included with the base station detected as being connectable (step S202: "indoors?"). In a case of FIG. 6, since the base station detected as being connectable is the wireless base station 110, a determination of being outdoors is made ("No" in step S202); a wireless communication system ((2) IEEE802.11b or IEEE802.11g as described above) that uses an outdoor frequency band is selected; and service (provision of a tethering function) as a wireless LAN access point is started (step S221).

On the other hand, in a case where the wireless communication apparatus 100A moves and is at a location shown in FIG. 10, the location information acquisition unit 241 detects two base stations, the wireless base station 110 and the micro base station 120A, as a connectible base station.

In this case, in step S202, since the micro base station 120A is included with the base station detected as being connectable, a determination of indoors is made ("Yes" in step S202). The search unit 243 of the wireless communication apparatus 100A searches for restriction information of the micro base station 120A that has been detected, from the configuration storage unit 231 (step S203).

As a result of the search, in a case where restriction information for the micro base station 120A is found ("Yes" in step S204), the selector 242A of the wireless communication apparatus 100A refers to the restriction information (step S211), and confirms whether or not a condition of the restriction information is fulfilled (step S212).

In a case where the restriction information of the micro base station 120A as shown in FIG. 8 is A (greater than or equal to an electric field strength of A), in a location relationship in FIG. 10, since the wireless communication apparatus 100A is located outside a range 121 A where the electric field strength is greater than or equal to A, in step S212 a determination is made that the condition is not fulfilled ("No" is step S212). Accordingly, in a case of FIG. 10, a wireless communication system ((2) IEEE802.11b or IEEE802.11g as described above) that uses an outdoor frequency band is selected, and a service (provision of a tethering function) as a wireless LAN access point is started (step S221).

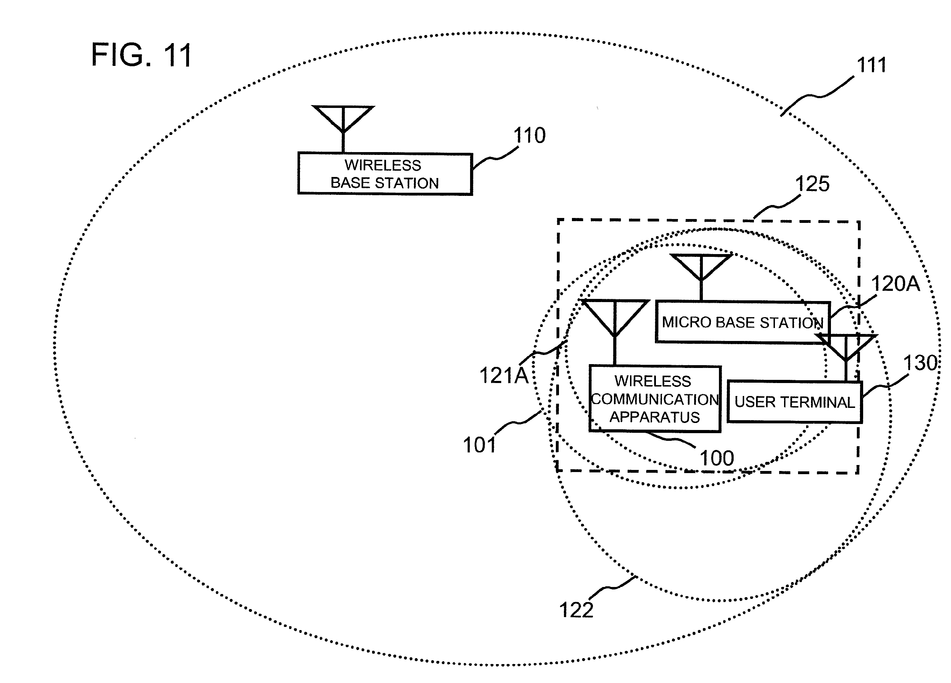

On the other hand, in a case where the wireless communication apparatus 100A moves and reaches a location shown in FIG. 11, the micro base station and its restriction information A are detected similar to FIG. 10 described above. At a location of FIG. 11, since the wireless communication apparatus 100A is located inside the range 121A where the electric field strength is greater than or equal to A, in step S212 a determination is made that the condition is fulfilled ("Yes" in step S212). As a result, in a case of FIG. 11, a wireless communication system ((1) IEEE802.11a or IEEE802.11n as described above) that uses an indoor frequency band is selected, and a service (provision of a tethering function) as a wireless LAN access point is started (step S206).

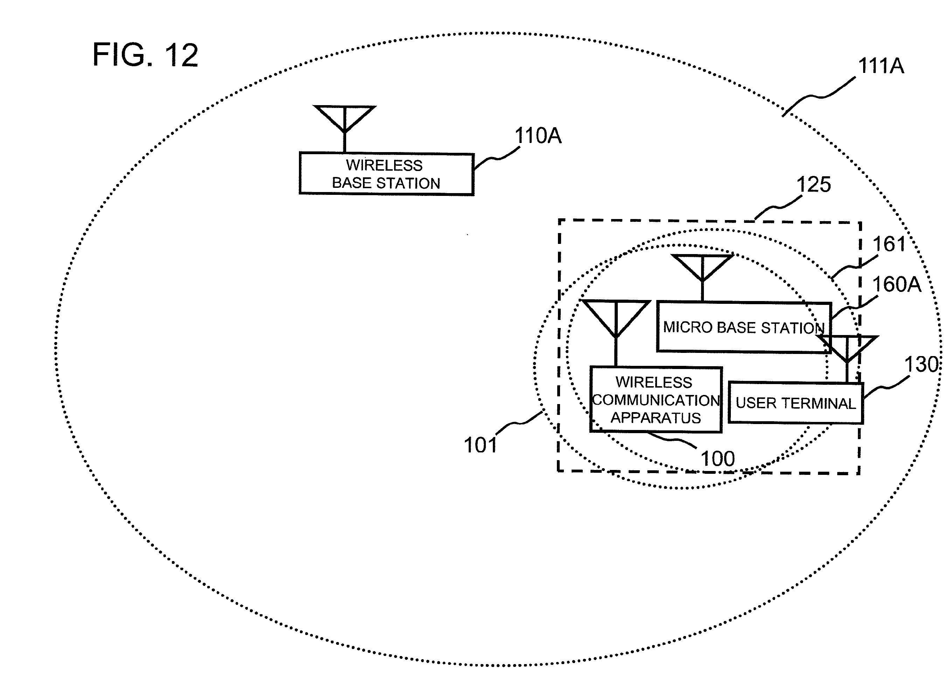

It is to be noted that, as shown in FIG. 12, in a case of moving to inside a cell 161 configured by an unknown micro base station 160A inside the cell 111A configured by another base station 110A, the following processing is performed.

In step S201 of FIG. 9, the location information acquisition unit 241 detects the wireless base station 110A and the micro base station 160A, as a connectable base station. In this case, as a result of the detection, since the micro base station 160A is included, a search of the configuration storage unit 231 is performed (step S203).

However, since there is no entry for the micro base station 160A in the table of FIG. 8, a determination of there being no base station information is made in step S204 ("No" in step S204). In this case, the configuration change unit 244 of the data processing unit 24A registers an entry for the micro base station 160A that has been newly detected, in the configuration storage unit 231 (step S205).

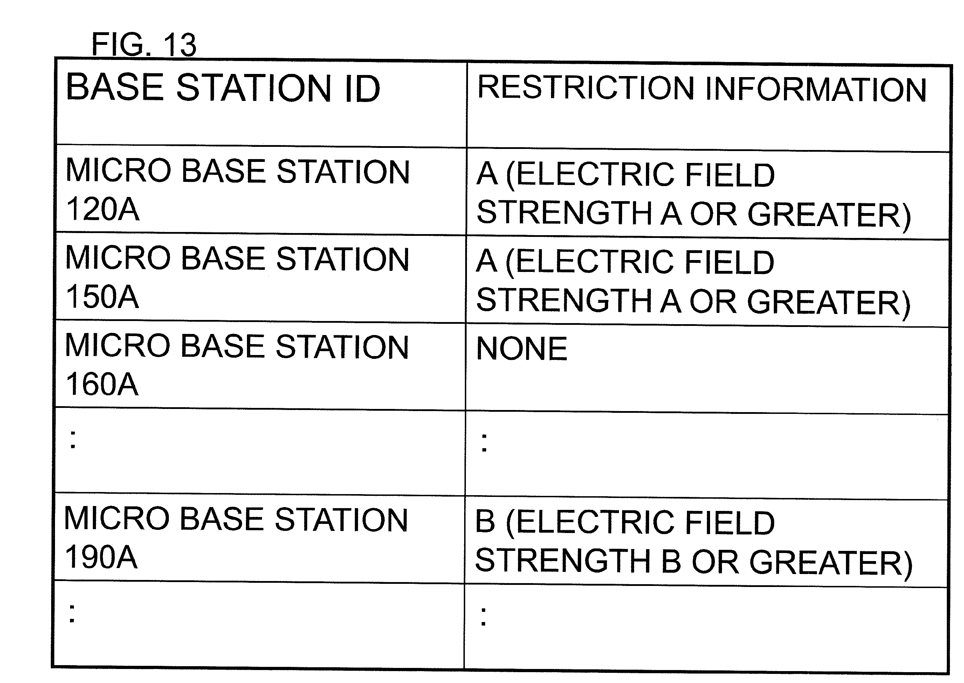

FIG. 13 is a diagram showing a state where an entry for the unknown micro base station 160A is added to the table of FIG. 8. In this way, by registering information of an unknown base station in the configuration storage unit 231, the next and subsequent times a determination is made as to whether or not connection is possible by referring to the restriction information. It is to be noted that in the example of FIG. 13, since the cell 161 configured by the micro base station 160A is smaller than the building 125, restriction information thereof is "none", but in a case where the cell 161 configured by the micro base station 160A is larger than the building 125, restriction information may be decided according to electric field strength similar to the micro base station 120A.

As above, according to the second exemplary embodiment, in addition to an effect of the first exemplary embodiment as described above, since reference is made to the restriction information configured in a detected base station, it is possible to make a selection of a wireless communication means with greater accuracy.

### [Third Exemplary Embodiment]

In the first and second exemplary embodiments a description was given in which the wireless communication apparatuses 100 and 100A are apparatuses providing a service as a wireless LAN access point using a wireless LAN, but the present invention is not limited thereto.

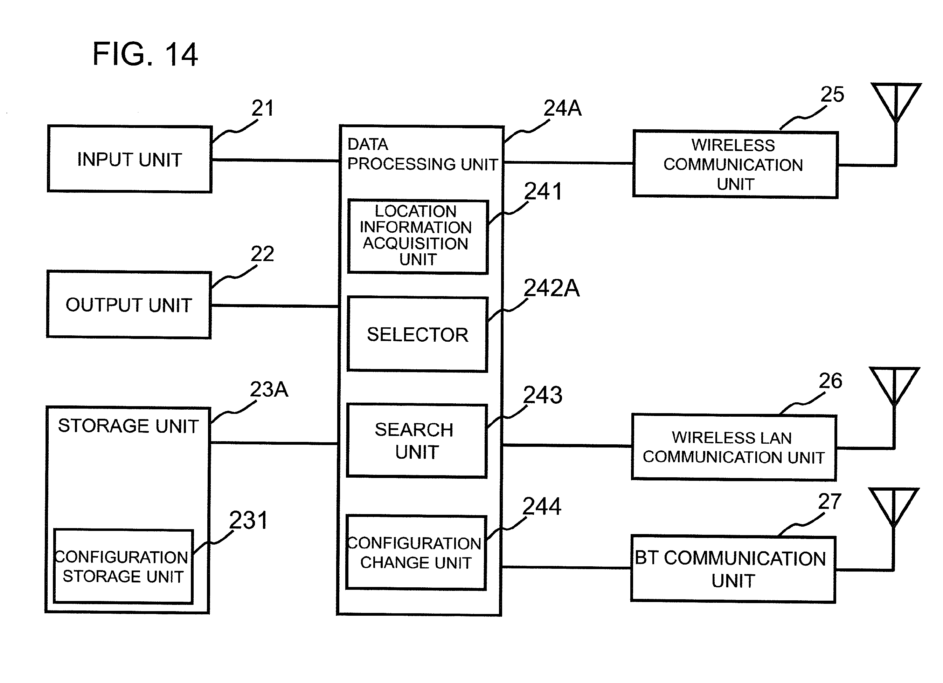

FIG. 14 is a block diagram representing a configuration of a wireless communication apparatus of a third exemplary embodiment of the present invention. In the present exemplary embodiment, in addition to a configuration of the second exemplary embodiment shown in FIG. 7, a BT communication unit 27 handling a BlueTooth (registered trademark) PAN (Personal Area Networking Profile) is added.

Thus, according to a configuration of the present exemplary embodiment that is provided with the BT communication unit 27, in a case of determining the location of the apparatus itself to be indoors or outdoors, operation is possible not as a wireless LAN access point, but as a BlueTooth (registered trademark) access point. Clearly, on this occasion, since selection of a frequency band (wireless communication system) is performed based on location information as described above, a user can use a service area formed by the wireless communication apparatus according to the present invention with reassurance. Furthermore, a decision as to whether or not to use BlueTooth (registered trademark) may be made based on distance between the wireless communication apparatus according to the present invention and a user terminal, battery performance of the wireless communication apparatus (continuous use time), or a user configuration giving consideration to these.

Besides BlueTooth (registered trademark) as described above, by installing a wireless communication unit handling other near field communication systems such as Zigbee (registered trademark) in the wireless communication apparatus, functionality as an access point for these wireless communication systems is possible.

In addition, it is possible to provide a wired communication means connecting with an external network by wiring as with a LAN adapter or the like, in the wireless communication apparatus 100. In a case of connecting with an external network using the wired communication means, it is possible to make a determination of being indoors. In this case, by a selector 242 of the wireless communication apparatus 100 selecting a wireless communication system using a frequency band for indoors, it is possible to inhibit radio wave interference.

### [Fourth Exemplary Embodiment]

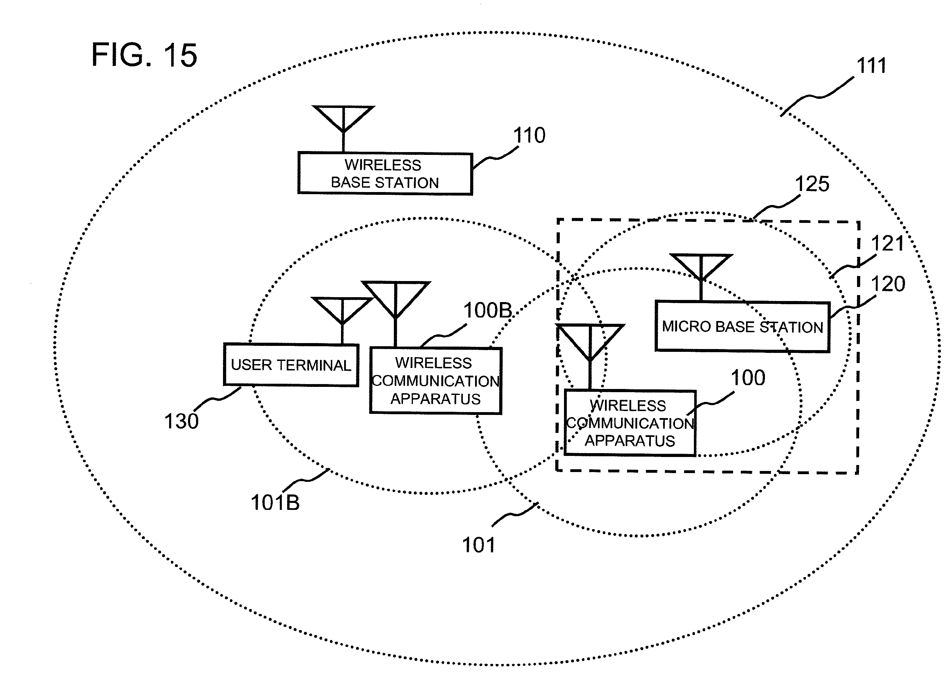

In the first to third exemplary embodiments described above, a description was given in which the user terminal 130 connected with an external network via one wireless communication apparatus, but as shown in FIG. 15, a configuration can also be used where the user terminal 130 connects with a base station 110 or a micro base station 120 via two or more wireless communication apparatuses.

In this case also, each wireless communication apparatus selects a wireless communication system in accordance with the location of each apparatus. For example, since the wireless communication apparatus 100B of FIG. 15 detects only the wireless base station 110, a determination of outdoors is made and a wireless communication system that uses an outdoor frequency band is selected. On the other hand, since the wireless communication apparatus 100 detects the micro base station 120, a determination of indoors is made and a wireless communication system that uses an indoor frequency band is selected.

In this way, according to the present exemplary embodiment, it is possible to use a wireless communication system where there is little interference and which is in compliance with laws and regulations, in two or more wireless communication apparatuses, without a user of a user terminal being aware of it.

A description has been given above of preferable exemplary embodiments of the present invention, but the present invention is not limited to the exemplary embodiments described above, and it is possible to add further modifications, substitutions or adjustments within a scope that does not depart from basic technical concepts of the invention. For example, a description was given where the location information acquisition unit 241 uses base station information as location information, but it is also possible to have a configuration that uses other location information. For example, the location information acquisition unit 241 may be configured by a GPS (Global Positioning System) data acquisition means, and may use GPS data as location information. In this case, the selector 242 can determine whether or not the location of the wireless communication apparatus 100 is in an area (for example, a range of the building 125 in FIG. 2) registered in advance as being indoors.

With regard to the location information acquisition unit 241, it is possible to have a configuration where a detection transmission signal is emitted as described in Patent Literature 2, and by receiving a reflected wave therefrom, a determination is made as to whether or not the apparatus itself is indoors.
Modifications and adjustments of exemplary embodiments and examples are possible within the bounds of the entire disclosure (including the scope of the claims) of the present invention, and also based on fundamental technological concepts thereof. Furthermore, multiple combinations and selections of various disclosed elements (including respective elements of the respective claims, respective elements of the respective exemplary embodiments, and respective elements of the respective drawings) are possible within the scope of the claims of the present invention. That is, the present invention clearly includes every type of transformation and modification that a person skilled in the art can realize according to the entire disclosure including the scope of the claims and to technological concepts thereof.

### [Reference Signs List]

- 11: first wireless communication unit
- 12: second wireless communication unit
- 14: location information acquisition unit
- 15: selector
- 21: input unit
- 22: output unit
- 23, 23A: storage unit
- 24, 24A: data processing unit
- 25: wireless communication unit
- 26: wireless LAN communication unit
- 27: BT communication unit
- 100, 100A, 100B: wireless communication apparatus
- 101: service area
- 110, 110A, 110B: wireless base station
- 111, 111A, 121, 122, 161: cell
- 120, 120A, 160A: micro base station
- 121A: range of electric field strength of A or greater
- 125: building
- 130: user terminal
- 231: configuration storage unit
- 241: location information acquisition unit
- 242, 242A: selector
- 243: search unit
- 244: configuration change unit

## Claims

1. A wireless communication apparatus comprising:
a first wireless communication unit that connects with an external network;
a second wireless communication unit that forms a service area in which it is possible to connect with said external network using either of a first frequency band and a second frequency band that are different from each other;
a location information acquisition unit that acquires location information of said apparatus; and
a selector that selects either of said first frequency band and said second frequency band, based on said location information.

2. The wireless communication apparatus according to claim 1, wherein said selector selects said frequency band, using information of a base station to which said first wireless communication unit is connected, as said location information.

3. The wireless communication apparatus according to claim 2, wherein, in a case of an indication that said base station is installed indoors, said selector selects a frequency band for indoors.

4. The wireless communication apparatus according to claim 2 or 3, comprising:
a configuration storage unit that stores, with regard to said base station installed indoors, restriction information for selecting said indoor frequency band, wherein
said selector refers to said restriction information to select said frequency band.

5. The wireless communication apparatus according to claim 4, further comprising:
a configuration change unit that registers, in a case where a base station to which said first wireless communication unit is connected is an unknown base station installed indoors, said base station in said configuration storage unit.

6. The wireless communication apparatus according to any one of claims 1 to 5, further comprising:
a wired communication unit that is connected to an external network by wiring, wherein
in a case of being connected to said external network by wiring, said second wireless communication unit forms a service area in which it is possible to connect with said external network, using a frequency band for indoors.

7. The wireless communication apparatus according to any one of claims 1 to 6, wherein said second wireless communication unit switches two wireless communication systems affiliated with said first and second frequency bands, among IEEE802.11a, IEEE802.11b, IEEE802.11g, IEEE802.11n and Bluetooth, in accordance with a selection result of said selector.

8. The wireless communication apparatus according to any one of claims 1 to 7, wherein said location information acquisition unit acquires GPS data, and said selector selects either of said first frequency band and said second frequency band, based on said GPS data.

9. A communication method, comprising steps of:
a wireless communication apparatus acquiring location information of the own apparatus, wherein the wireless communication apparatus comprising a first wireless communication unit that connects with an external network and a second wireless communication unit that forms a service area in which it is possible to connect with said external network using either of a first frequency band and a second frequency band that are different from each other and
selecting, based on said location information, either of said first frequency band and said second frequency band, and connects a user terminal to said external network.

10. A program that executes, in a computer installed in a wireless communication apparatus comprising a first wireless communication unit that connects with an external network and a second wireless communication unit that forms a service area in which it is possible to connect with said external network using either of a first frequency band and a second frequency band that are different from each other:
a process of acquiring location information of the own apparatus, and
a process of selecting, based on said location information, either of said first frequency band and said second frequency band, and of connecting a user terminal to said external network.
